# EUROPÄISCHE PATENTSCHRIFT

(11) **EP 2 049 574 B1**
(45) Veröffentlichungstag und Bekanntmachung des Hinweises auf die Patenterteilung: **05.09.2012**
(21) Anmeldenummer: 07729122.7
(22) Anmeldetag: 15.05.2007
(51) Int. Cl.: C08F 220/18, C08F 220/10, C08F 8/26, C08F 8/34, C08F 6/02, C08F 2/38

(54) **VERWENDUNG EINER SCHWEFELVERBINDUNG ZUR HERSTELLUNG VON HALOGENFREIEN ATRP-PRODUKTEN**
USE OF A SULFUR COMPOUND FOR PREPARING HALOGEN-FREE ATRP PRODUCTS
UTILISATION D'UN COMPOSE DE SOUFRE POUR LA FABRICATION DE PRODUITS D'ATRP SANS HALOGÈNE

(30) Priorität: 09.08.2006 DE 102006037350
(43) Veröffentlichungstag der Anmeldung: 22.04.2009
(73) Patentinhaber: Evonik Röhm GmbH, 64293 Darmstadt (DE)
(72) Erfinder: BALK, Sven, 60594 Frankfurt (DE); LÖHDEN, Gerd, 45316 Essen (DE); OSTHAUS, Elke, 51643 Gummersbach (DE)
(86) Internationale Anmeldenummer: PCT/EP2007/054670
(87) Internationale Veröffentlichungsnummer: WO 2008/017523

(56) Entgegenhaltungen:
- WO-A-99/20659
- WO-A-2004/087777
- A. SNIJDER, B. KLUMPERMAN, R VAN DER LINDE: "End-group modification of poly(butyl acrylate) prepared by atom transfer radical polymerization: Mechanistic study using gradient polymer elution chromatography" JOURNAL OF POLYMER SCIENCE: PART A: POLYMER CHEMISTRY, Bd. 40, 2002, Seiten 2350-2359, XP002447521 in der Anmeldung erwähnt
- V. BHADRAIAH SADHU, J. PIONTECK, D. VOIGT, H. KOMBER, D. FISCHER, B. VOIT: "Atom-transfer radical polymerization: A strategy for the synthesis of halogen-free amino-functionalized poly(methyl methacrylate) in a one-pot reaction" MACROMOL. CHEM. PHYS., Bd. 205, 2004, Seiten 2356-2365, XP002447522 in der Anmeldung erwähnt
- F. SCHÖN, M. HARTENSTEIN, A. H. E. MÜLLER: "New strategy for the synthesis of halogen-free acrylate macromonomers by atom transfer radical polymerization" MACROMOLECULES, Bd. 34, 2001, Seiten 5394-5397, XP002447523 in der Anmeldung erwähnt

## Beschreibung

### Gebiet der Erfindung

Die vorliegende Erfindung betrifft die in-situ Entfernung von endständigen Halogenatomen von Polymerketten, die mittels Atom Transfer Radikal Polymerisation (im Folgenden kurz ATRP) hergestellt wurden. Zusätzlich umfasst die vorliegende Erfindung ein Verfahren zur Entfernung von Übergangsmetallen aus Polymerlösungen. Im Speziellen handelt es sich um die Entfernung von Übergangsmetallkomplexen mit einem Gehalt von bis zu 1000 ppm. Im ganz Speziellen handelt es sich um die Entfernung von Übergangsmetallkomplexen, die zumeist Kupfer enthalten, aus Polymerlösungen nach einer abgeschlossenen Atom Transfer Radikal Polymerisation.

Ein ganz besonderer Aspekt der vorliegenden Erfindung ist, dass durch die Zugabe eines Reagenz in einem Verfahrensschritt gleichzeitig eine Entfernung der endständigen Halogenatome von den Polymerketten, optional eine Funktionalisierung der Polymertermini, eine Entfernung der Übergangsmetallverbindungen mittels Fällung und eine Salzbildung der zuvor an den Übergangsmetall koordinierten Liganden, die wiederum eine einfache Entfernung der selben ermöglicht, erfolgt.

Die ATRP stellt ein wichtiges Verfahren zur Darstellung einer Vielzahl von Polymeren wie z.B. Polyacrylate, Polymethacrylate oder Polystyrole dar. Mit dieser Art der Polymerisation ist man dem Ziel maßgeschneiderter Polymere ein gutes Stück näher gekommen. Die ATRP-Methode wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ=5.000-120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

### Stand der Technik

Die Entwicklung eines Verfahrensschrittes in der ATRP, bei dem gleichzeitig das Halogen am Kettenende des Polymers entfernt wird, das Übergangsmetall gleichzeitig vollständig gefällt wird, der Ligand in eine leicht abzutrennende ionische Form überführt wird und optional eine Funktionalisierung der Kettenenden vorgenommen werden kann, ist in keiner Weise Stand der Technik. Dies gilt allein schon für die Kombination der Halogenentfernung und der gleichzeitigen Übergangsmetallfällung bzw. Funktionalisierung und Übergangsmetallfällung.

Im Weiteren stellt die vorliegende Erfindung jeweils für sich allein eine deutliche Verbesserung gegenüber dem Stand der Technik sowohl bezüglich der Halogenentfernung als auch bezüglich der Übergangsmetallfällung dar. Da eine Kombination aus beiden Funktionen noch kein Teil des Standes der Technik ist, werden im Folgenden diese beiden Aspekte getrennt von einander beschrieben.

Der ATRP-Prozess beruht auf einem Redoxgleichgewicht zwischen der nur in geringer Konzentration vorliegenden wachsenden, radikalischen Polymerkette und einer Übergangsmetallverbindung in höherer Oxidationsstufe (z.B. Kupfer II) und der schlafenden, bevorzugt vorliegenden Kombination aus der mit einem Halogen bzw. einem Pseudohalogen terminierten Polymerkette und der entsprechenden Übergangsmetallverbindung in geringerer Oxidationsstufe (z.B. Kupfer I). Dies gilt sowohl für die ATRP in der eigentlichen Form, die mit entsprechend (Pseudo-) Halogen substituierten Initiatoren gestartet wird, als auch für die weiter unten beschriebene reverse ATRP, bei der das Halogen erst bei Einstellung des Gleichgewichts an die Polymerkette gebunden wird. Das Halogenatom verbleibt unabhängig von dem gewählten Verfahren nach Abbruch der Reaktion an den jeweiligen Kettenenden. Diese endständigen Halogenatome können in mehrfacher Hinsicht von Nutzen sein. In einer großen Zahl von Schriften wird die Verwendung eines solchen Polymers als Makroinitiator nach einer Aufreinigung oder durch sequentielle Zugabe weiterer Monomerfraktionen zum Aufbau von Blockstrukturen beschrieben. Als repräsentatives Beispiel sei auf US 5,807,937 bzgl. der sequentiellen Polymerisation und auf US 6,512,060 bzgl. der Synthese von Makroinitiatoren verwiesen.

Problematisch ist jedoch die dem Fachmann durchaus bekannte thermische Instabilität solcher Halogen-funktionalisierter Polymere. Dies ist einer der Nachteile der ATRP nach Stand der Technik. Insbesondere Polymethacrylate bzw. Polyacrylate erweisen sich bei Vorhandensein terminaler Halogenatome deutlich empfindlicher gegenüber einer Depolymerisation. Daher ist eine Methode zur Entfernung dieser endständigen Halogenatome von großem Interesse. Ein weit verbreitetes Verfahren basiert auf der Substitution der Halogene mit Metallalkoholaten unter Fällung des gebildeten Metallhalogenids. Ein solches Verfahren wird zum Beispiel in US 2005/090632 beschrieben. Nachteil an diesem Vorgehen ist die nur begrenzte Verfügbarkeit der Metallalkoholate, deren Kosten und, dass das Verfahren nur nach einer Reinigung der Polymere durchgeführt werden kann.

Auch andere Verfahren zur Substitution der endständigen Halogengruppen sind bekannt. Aber sowohl Azide (s. Matyjeszewski et al., Macromol. Rapid Commun, 18, 1057-66. 1997) als auch Phosphine (Coessens, Matyjaszewski, Macromol. Sci. Pure Appl. Chem., 36, 653-666, 1999) führen nur zu unvollständigen Umsätzen, sind toxikologisch sehr bedenklich und kostenintensiv. Ferner sind auch diese Verfahren nur in einer polymeranalogen Reaktion nach einer Produktaufarbeitung einsetzbar.

Erfindungsgemäß wird zur Substitution der endständigen Halogenatome ein Mercaptan wie zum Beispiel Methylmercaptan oder n-Dodecylmercaptan eingesetzt. Dieses kann durchaus auch weitere Funktionalitäten tragen. Beispiele dazu sind Thioglykolsäure oder Mercaptoethanol. Einzig in Snijder et al. (J. of Polym. Sci.: Part A: Polym. Chem.) wird eine solche Substitutionsreaktion kurz beschrieben. Ziel in dieser wissenschaftlichen Veröffentlichung war die Funktionalisierung der Kettenenden mit OH-Gruppen. Die Entfernung der in diesem Fall endständigen Bromatome ist nur als ein zielführender Nebeneffekt zu betrachten. So wird die Reaktion ausschließlich mit Mercaptoethanol als Reagenz beschrieben. Eine Substitution mit unfunktionalisierten, bzw. säure-, amin- oder epoxyfunktionalisierten Mercaptanen wird nicht erwähnt. Ein weiterer Unterschied zur vorliegenden Erfindung ist die polymeranaloge Durchführung. In der beschriebenen Schrift wird die Substitutionreaktion erst nach Aufreinigung des ATRP-Produktes in einer zweiten Reaktionsstufe durchgeführt. Damit ergibt sich direkt ein dritter wichtiger Unterschied zur vorliegenden Erfindung. Der erfindungsgemäße Effekt der Fällung der Übergangsmetallverbindungen aus der ATRP-Lösung durch Zugabe von Mercaptanreagenzien wird in dieser Schrift nicht beschrieben.

In WO 00/34345 und in Heuts et al. (Macromol. Chem. Phys., 200, 1380-5, 1999) wird die Durchführung der ATRP unter anfänglicher Zugabe von n-Dodecylmercaptan bzw. Octylmercaptan beschrieben. In beiden Fällen werden zwar thermisch stabilere, wahrscheinlich halogenfreie Polymere beschrieben; in beiden Fällen wird aber auch darauf hingewiesen, dass die Breite der Molekulargewichtsverteilung größer 1,6 und damit der eines freiradikalisch polymerisierten Materials sehr ähnlich ist. Die Vorteile der ATRP eng verteilter Produkte und Kontrolle der Polymerarchitektur sind damit nicht mehr verfügbar. Abgesehen davon ist bei dem beschriebenen Vorgehen eine Fällung der Übergangsmetallverbindungen nicht erwähnt. Dies ist voraussichtlich auf eine von der vorliegenden Erfindung grundsätzlich abweichende Wahl weniger basischer Liganden zurückzuführen.

In WO 2005/098415 wird die wiederum polymeranaloge, d.h. nach Reinigung des Polymers durchgeführte, Substitution der endständigen Halogenatome an Polystyrolen beschrieben. Hier wird ausschließlich nur an einem Kettenende mit Thioharnstoff und anschließendem Quenschen mit Natriumhydroxid zu Natriumsulfid-Gruppen substituiert. Diese Produkte sind Präpolymere für die Knüpfung auf Trägermaterialien. Verwendet werden die Produkte als Füllmaterial für Chromatographiesäulen. Neben der Zweistufigkeit, der nur einseitigen Substitution und dem grundsätzlich abweichenden Mechanismus unterscheidet sich diese Schrift auch wieder im fehlenden Zusammenhang zur Produktaufarbeitung. Ferner wird hier die beschriebene Substitution nicht nur auf ATRP- sondern auch auf RAFT- und NMP-Polymerisate (nitroxide-mediated polymerization) beansprucht.

Eine der wenigen Beschreibungen von in-situ Methoden findet sich in Schön et al. (Macromolecules, 34, 5394-7, 2001). Hier wird der in der ATRP benötigte mehrzähnige Aminligand (in diesem Fall trifunktionelles PMDETA) im doppelt äquivalenten Überschuss zum Kupferreagenz eingesetzt. Der Ligand substituiert gegen Ende der Polymerisation das Halogen über einen nicht näher beschriebenen Mechanismus mit Wasserstoff. Nachteilig dabei ist jedoch zum einen die sehr hohe Ligandenkonzentration, die das Produkt verfärben kann und die Kupferentfernung zusätzlich erschwert. Zum anderen ist das Verfahren nur für eine großtechnisch kaum durchführbare ATRP in Substanz beschrieben. Die gleiche Methode zusätzlich auch in Lösung wird in Pionteck et al. (Marcomol. Symp., 210, 147-155, 2004 und Macromol. Chem. Phys., 205, 2356-65, 2004) beschrieben. Sie beschreiben jedoch Amingruppen am Polymerende und verweisen als weiteren Nachteil auf sehr breite Molekulargewichtsverteilungen > 2. Diese treten auch bei Versuchen einer Lösungspolymerisation auf und beseitigen den großen Vorteil einer Reaktionskontrolle der ATRP.

Eine Alternative ist das Abfangen der zeitweise freiradikalisch vorliegenden Kettenenden mit stabilen Radikalen wie Nitroxiden (siehe z.B: Beyou et al., Macromol. Chem. Phy., 202, 974-9, 2001) oder die gezielte Rekombination der radikalischen Kettenenden. Beide Verfahren benötigen einen zusätzlichen, zeitaufwändigen Eingriff - wie z.B. Temperaturerhöhungen - in das Polymerisationsverfahren. Auch ist dem Fachmann leicht ersichtlich, dass dieses Verfahren weder die Katalysatorentfernung erleichtert, noch dass es zu den ATRP typischen Polymeren mit engen Molekulargewichtsverteilungen führen kann. Diese Methode wird in der Literatur oft als ATRA (Atom Transfer Radikal Addition) bezeichnet. Eine Variante der ATRA ist die Zugabe von Reagenzien, die in-situ in zwei Radikale zerfallen, von denen eins wiederum irreversibel ein radikalisches Kettenende abfängt und das zweite kleinere neue Ketten starten kann. Nachteil dieses Vorgehens ist neben der wieder verringerten Reaktionsgeschwindigkeit die schlechte kommerzielle Verfügbarkeit der benötigten Reagenzien und das Freisetzen zusätzlicher Radikale, die entweder sehr schnell abgefangen werden müssen oder aber zu unerwünschten oligomeren Nebenprodukten führen. Beispielhaft wird dieses Verfahren in den Arbeiten von Sawamoto beschrieben (Macromolecules, 31,6708-11, 1998 und J Polym. Sci. Part A: Polym. Chem., 38, 4735-48, 2000).

Der Stand der Technik bezüglich der Entfernung der Übergangsmetallverbindungen aus der ATRP-Lösung ergibt sich wie folgt:

Die Reinigung von Polymeren bzw. Polymerlösungen ist vielfach umschrieben worden. So können zum Beispiel niedermolekulare Verbindungen aus Lösungen oder auch aus festen Polymeren mittels Extraktionsverfahren entfernt werden. Allgemein beschrieben ist ein solches Verfahren z.B. in WO 02/28916. Um jedoch Übergangsmetallkomplexe fast vollständig - d.h. unter einen Gehalt von 1 ppm - aus einer Polymerlösung zu entfernen, ist eine reine Extraktion ungeeignet. Eine nahezu vollständige Entfernung dieser Verbindungen ist jedoch aus unterschiedlichen Gründen von großer Bedeutung. Zunächst sind Übergangsmetalle insbesondere mit einer koordinierten Ligandensphäre besonders farbige Verbindungen. Eine Färbung des Endproduktes ist jedoch in vielen Anwendungen unerwünscht. Ferner können Übergangsmetalle in zu hohen Konzentrationen Anwendungen in Bezug auf Lebensmittelkontakt oder kosmetische Anwendungen ausschließen. Auch ist eine Verringerung der Produktqualität bei relevanten Konzentrationen durchaus zu erwarten: zum einen können Metallanteile eine Depolymerisation katalysieren und somit die thermische Stabilität des Polymers verringern - zum anderen ist durch Koordination von funktionellen Gruppen des Polymers eine signifikante Erhöhung der Schmelz- bzw. Lösungsviskosität nicht auszuschließen.

Nicht zuletzt können auch die mit dem Übergangsmetall eingebrachten Liganden unerwünschte Nebeneffekte mit sich bringen. Viele dieser stark koordinativen Verbindungen, wie zum Beispiel die in der ATRP verbreiteten di- oder trifunktionellen Amine, wirken in Folgereaktionen wie z.B. einer Hydrosilylierung als Katalysatorgift. So ist nicht nur die Entfernung des Übergangsmetalls an sich von großem Interesse, sondern auch eine möglichst effiziente Reduzierung der Ligandenkonzentration in der Aufarbeitung wichtig. Somit sind Verfahren, die unter einer Zerstörung des Übergangsmetallkomplexes und ausschließlicher Entfernung des Metalls ablaufen, für viele Folgereaktionen bzw. Anwendungen nicht ausreichend. Dies gilt insbesondere auch, da viele dieser Liganden geruchs- und farbintensiv sind.

Eine spezielle Form der Extraktion stellt die wässrige flüssig-flüssig-Extraktion aus Polymerlösungen dar. So wird zum Beispiel bei der Synthese von Polyphenylenoxid ein Kupferkatalysator verwendet, der nach der Polymerisation durch wässrige Extraktion aus der Polymerlösung entfernt wird (vgl. Ullmanns Exyclopedia of Industrial Chemistry, 5. Auflage 1992, Bd. 26 a, S. 606 ff). Nachteilig an dieser Methode ist, dass viele polare Polymere als Suspensionsstabilisatoren wirken und verhindern, dass die beiden flüssigen Phasen getrennt werden können. So lassen sich diese Verfahren beispielsweise nicht zur Aufarbeitung von Polymethylmethacrylaten anwenden. Ein weiterer Nachteil ist die nur sehr aufwendige Übertragung eines solchen Verfahrens auf großtechnische Produktionsmaßstäbe.

Im Labormaßstab erfolgt die Abtrennung der Übergangsmetallverbindung - zum Beispiel eines Kupferkatalysators - aus Polymerlösungen zumeist durch Adsorption an Aluminiumoxid und anschließendes Ausfällen des Polymers in geeigneten Fällungsmitteln oder durch direktes Ausfällen ohne Adsorptionsschritt. Als Fällungsmittel eignen sich insbesondere sehr polare Lösungsmittel wie Methanol. Bei entsprechender Ligandensphäre könne aber auch besonders unpolare Fällungsmedien wie Hexan oder Pentan zum Einsatz kommen. Ein derartiges Vorgehen ist jedoch aus unterschiedlichen Gründen nachteilig. Zunächst liegt das Polymer nach der Fällung nicht in einer einheitlichen Form wie zum Beispiel einem Granulat vor. Aus diesem Grund ist die Abtrennung und damit die weitere Aufarbeitung schwierig. Des Weiteren fallen bei dem Fällprozess große Mengen des Fällungsmittels gemischt mit den Lösungsmitteln, den Katalysatorresten und weiteren abzutrennenden Bestandteilen wie Restmonomeren an. Diese Mischungen müssen in Folgeprozessen aufwändig getrennt werden. Insgesamt sind Fällungsprozesse auf eine großtechnische Produktion nicht übertragbar und nur im Labormaßstab sinnvoll anzuwenden.

Darüber hinaus sind Verfahren bekannt, bei denen die Abtrennung eines festen Katalysators von der flüssigen polymerhaltigen Lösung erfolgt. Hierbei wird der Katalysator selbst beispielsweise durch Oxidation unlöslich oder er wird vor oder nach der Polymerisation an ein festes Absorptionsmittel oder an ein gequollenes, aber unlösliches Harz gebunden. Die flüssige polymerhaltige Phase wird durch Filtration oder Zentrifugation vom unlöslichen Material getrennt. So wird zum Beispiel in CN 121011 ein Verfahren beschrieben, in dem ein Adsorptionsmittel (insbesondere Aktivkohle oder Aluminiumoxid) nach dem ATRP-Prozess in die Polymerlösung gegeben und anschließend durch Filtration abgetrennt wird. Nachteilig ist hierbei, dass eine vollständige Abtrennung nur durch sehr große Mengen an Adsortpionsmittel möglich ist, obwohl der Gehalt an Übergangsmetallkomplexen in der Reaktionsmischung relativ gering ist. Die Verwendung von Aluminiumoxid wird auch in JP 2002 363213 beansprucht. In JP 2005 015577, JP 2004 149563 und weiteren Schriften werden basische oder saure Silica zum Einsatz gebracht. In JP 2003 096130, JP 2003 327620, JP 2004 155846 und einer Reihe weiterer Patentschriften der Firma Kaneka (bzw. Kanegafuchi) werden saure, basische oder Kombinationen aus Hydrotalciten als Adsorptionsmittel in zumeist mehrstufigen Filtrationsverfahren verwendet. Auch hier werden große Mengen des anorganischen Materials eingesetzt. Weiterhin sind derartige Adsorptionsmittel relativ teuer und müssen sehr aufwändig recycelt werden. Die Unwirtschaftlichkeit kommt insbesondere bei der Verwendung von lonenaustauschermaterialien zum Tragen (vgl. Matyjazewski et al., Macromolecules, 2000, 33(4), S.1476-8).

Dieser beschriebene Effekt liegt auch der Erfindungsschrift DE 100 15 583, in der ein ATRP-Verfahren in unpolaren Lösungsmitteln beschrieben wird, zugrunde. Der Übergangsmetallkomplex wird während oder nach der Reaktion durch Oxidation unlöslich und kann abfiltriert werden. Derartige Verfahren eignen sich jedoch nur zur Herstellung von relativ unpolaren Polymeren. Werden polare Polymere hergestellt, beispielsweise Polymethylmethacrylate, so sind die Polymere in dem Lösungsmittel unlöslich. Damit ist dieses Vorgehen nur sehr eingeschränkt, in sehr speziellen Polymerisationen anwendbar. Der durch dieses Vorgehen verfügbare Produktbereich lässt sich mittels gezieltem "Design" der Liganden, die unter Aufarbeitungsbedingungen zu einer Unlöslichkeit des Übergangsmetallkomplexes führen, noch erweitern - so zum Beispiel beschrieben in Liou et al., Polym. Prep. (Am. Chem. Soc., Div. Poly. Chem.; 1999, 40(2), S. 380). Analog dazu wird in JP 2005 105265 mit EDTA zusätzlich ein Komplexierungsmittel zur Veränderung der Löslichkeit zugegeben. Nachteilig sind die sehr hohen Preise für die Liganden. Auch ist dem Fachmann leicht ersichtlich, dass sämtliche auf rein verfahrensbegleitender Fällung basierenden Verfahren ohne Zugabe eines Fällungsmittels nur zu einer unvollständigen Katalysatorentfernung führen können. Die meisten Verfahren des Standes der Technik sind daher mehrstufige Verfahren unter Zugabe von Hilfsstoffen, welche zumeist als Adsorptionsmittel fungieren. Entsprechende nachteilige Aufarbeitungen unter Phasenseparation finden sich auch in JP 2002 356510.

In solchen mehrstufigen Prozessen wird oft eine Zentrifugation eingesetzt. Dieses Verfahren ist nicht wirtschaftlich auf großtechnische Produktionsvolumina erweiterbar. Beschrieben werden solche Stufen in EP 1 132 410 oder JP 2003 119219.

In WO 2007/115848 wird ein Verfahren zur Entfernung von Übergangsmetallverbindungen aus Polymerlösungen beschrieben. Insbesondere wird die Fällung eines Kupferkatalysators mit Mercaptanen aus ATRP-Lösungen beschrieben ist. Diese Schrift gibt dem Fachmann keine Lehre zur Entfernung von Halogenatomen aus einem Polymer.

### Aufgabe

Aufgabe der vorliegenden Erfindung ist es, Polymere mittels Atom Transfer Radikalpolymerisation (ATRP) herzustellen, die keine oder nur in Spuren Halogene bzw. Pseudohalogene enthalten. Damit ist es auch Aufgabe, die thermische Stabilität dieser Polymere gegenüber halogenhaltigen Produkten zu verbessern.

Insbesondere ist es Aufgabe dieser Erfindung, Polymere zu realisieren, die mit Ausnahme der Endgruppen vollständig den Materialien entsprechen, die nach Stand der Technik mittels ATRP hergestellt werden können.

Eine weitere Aufgabe dieser Erfindung ist es, die Halogenentfernung im Rahmen eines großtechnisch einfach zu realisierenden und wirtschaftlichen Prozesses durchzuführen. Ganz insbesondere ist es Aufgabe, die Halogenentfernung ohne zusätzliche Produktaufarbeitung direkt am Ende des eigentlichen ATRP-Prozesses im gleichen Reaktionsgefäß durchzuführen (one-pot-reaction).

Parallel ist es in Anbetracht des Standes der Technik eine Aufgabe dieser Erfindung, ein großtechnisch realisierbares Verfahren zur Abtrennung von Übergangsmetallkomplexen aus Polymerlösungen zur Verfügung zu stellen. Zugleich soll das neue Verfahren kostengünstig und schnell durchführbar sein. Darüber hinaus war es Aufgabe der vorliegenden Erfindung, ein Verfahren zur Verfügung zu stellen, das ohne aufwändige Umbauten auf bekannten, zur Lösungspolymerisation geeigneten Anlagen implementiert werden kann. Eine weitere Aufgabe war es, bereits nach einem Filtrationsschritt besonders niedrige Restkonzentrationen der Übergangsmetallkomplexverbindungen von unter 5 ppm zu realisieren.

Insbesondere war es Aufgabe der vorliegenden Erfindung, Übergangsmetallreste nach Polymerisationsabbruch aus Lösungen einer ATRP-Polymerisation zu entfernen.

### Lösung

Gelöst wurde die Aufgabe durch ein Verfahren zur Entfernung von Halogenatomen aus Polymeren und Abtrennung von Übergangsmetallverbindungen, dadurch gekennzeichnet, dass die Halogenatome mittels Zusatz einer geeigneten Schwefelverbindung substituiert und simultan die Übergangsmetallverbindung mit dieser Schwefelverbindung gefällt und anschließend mittels Filtration abgetrennt werden.

Die Zugabe der geeigneten Schwefelverbindungen erfolgt nach oder während des Abbruchs der Polymerisation. Diese Schwefelverbindungen erfüllen gleich mehrere Zwecke gleichzeitig. Zum einen werden die endständigen Halogenatome an den Polymerketten substituiert und damit vom Polymer entfernt. Zum anderen entsteht dabei ein geeignetes Reagenz, das zum Quenschen der Übergangsmetallverbindung führt und das Metall nahezu vollständig ausfällt. Dieses kann anschließend mittels Filtration einfach abgetrennt werden.

Im Detail führt die Zugabe von Mercaptanen zu Halogen terminierten Polymerketten, wie sie während oder am Ende eines ATRP Prozesses vorliegen, zu einer Substitution des Halogens. Am Kettenende des Polymers bildet sich somit eine Thioethergruppe, wie sie bereits aus der freiradikalischen Polymerisation mit Schwefel basierten Reglern bekannt ist. Als Abspaltungsprodukt wird ein Halogenwasserstoff gebildet.

Durch die Wahl des Reglers ist es zusätzlich möglich, weitere Funktionalitäten wie Hydroxy- oder Säuregruppen am Polymerkettenende einzuführen.

Der sich bildende Halogenwasserstoff kann in organischen Polymerisationslösungen nicht hydrolisiert werden und verfügt somit über eine besonders ausgeprägte Reaktivität, die zu einer Protonierung der unten beschriebenen, zumeist basischen Liganden an der Übergangsmetallverbindung führt. Dieses Quenschen des Übergangsmetallkomplexes verläuft äußerst schnell und ergibt eine direkte Fällung der nun unmaskierten Übergangsmetallverbindungen.

Ein ganz besonderer Aspekt der vorliegenden Erfindung ist, dass durch die Zugabe eines Reagenz in einem Verfahrensschritt gleichzeitig eine Entfernung der endständigen Halogenatome von den Polymerketten, optional eine Funktionalisierung der Polymertermini, eine Entfernung der Übergangsmetallverbindungen mittels Fällung und eine Salzbildung der zuvor an dem Übergangsmetall koordinierten Liganden, die wiederum eine einfache Entfernung der selben ermöglicht, erfolgt.

Der Abbruch der Reaktion erfolgt in dem beschriebenen ATRP-Verfahren zumeist durch Oxidation des Übergangmetalls. Dies kann ganz einfach mittels Einleiten von Luftsauerstoff oder durch Zugabe von Schwefelsäure erfolgen. Im Falle von Kupfer als Katalysator fällt bei diesem bereits etablierten Vorgehen oftmals bereits ein Teil des Metallkomplexes aus. Dieser Anteil ist jedoch zur Weiterverarbeitung des Polymers nicht ausreichend. Gelöst wurde die Aufgabe der optimierten Katalysatorentfernung durch die beschriebene effiziente Entfernung der am Übergangsmetall koordinierten Liganden mittels Protonierung. Diese ergibt sich indirekt durch die Zugabe von Schwefelverbindungen wie z.B. Mercaptanen.

Bestandteil dieser Erfindung ist darüber hinaus, dass die verwendeten Schwefelverbindungen nahezu vollständig an die Polymerketten gebunden werden, und dass man mittels einfacher Modifikationen in der Filtration die Restschwefelanteile ganz einfach, vollständig entfernen kann. Auf diese Weise erhält man Produkte, die keinen unangenehmen, schwefelverbindungsbedingten Geruch aufweisen.

Ein großer Vorzug der vorliegenden Erfindung ist die effiziente Entfernung der Übergangsmetallkomplexe aus der Lösung. Durch Anwendung des erfindungsgemäßen Verfahrens ist es möglich, den Übergangsmetallgehalt mit einer Filtration um mindestens 80 %, bevorzugt um mindestens 95 % und ganz besonders bevorzugt um mindestens 99 % zu reduzieren. In besonderen Ausführungen ist es sogar durch Anwendung des erfindungsgemäßen Verfahrens möglich, den Übergangsmetallgehalt um mehr als 99,9 % zu reduzieren.

Weiterhin überraschend wurde gefunden, dass entsprechende Schwefelverbindungen bezogen auf die Kettenenden nur in einem minimalen Überschuss von 1,6 Äquivalenten, bevorzugt 1,2 Äquivalenten und besonders bevorzugt unter 1,1 Äquivalenten eingesetzt werden müssen. Dieser minimale Überschuss führt zu einem an sich nur sehr geringen Restschwefelgehalt in der Polymerlösung, der durch Modifikation des folgenden Filtrationsschrittes leicht entfernt werden kann.

Bevorzugt handelt es sich bei den erfindungsgemäß nach oder während des Polymerisationsabbruchs der Polymerlösung zugegebenen Reagenzien um Verbindungen, die Schwefel in organisch gebundener Form enthalten. Insbesondere weisen diese zur Fällung von Übergangsmetallionen bzw. Übergangsmetallkomplexen verwendeten schwefelhaltigen Verbindungen SH-Gruppen auf. Als organische Verbindungen seien ganz besonders Mercaptane und / oder andere funktionalisierte oder auch unfunktionalisierte Verbindungen, die eine oder mehrere Thiolgruppen aufweisen aufgeführt. Dabei kann es sich um organische Verbindungen wie Thioglykolessigsäure, Mercaptopropionsäure, Mercaptoethanol, Mercaptopropanol, Mercaptobutanol, Mercaptohexanol, Octylthioglykolat, Methylmercaptan, Ethylmercaptan, Butylmercaptan, Dodecylmercaptan, Isooctylmercaptan und tert-Dodecylmercaptan handeln. Bei den meisten aufgeführten Beispielen handelt es sich um kommerziell leicht verfügbare, in der freiradikalischen Polymerisation als Regler eingesetzte Verbindungen. Die vorliegende Erfindung lässt sich jedoch nicht auf diese Verbindungen einschränken. Entscheidend ist vielmehr, dass das eingesetzte Fällungsmittel eine -SH-Gruppe aufweist.

Insbesondere sehr überraschend wurde gefunden, dass als besagte Schwefelverbindungen Verbindungen verwendet werden können, die aus der freiradikalischen Polymerisation als Regler bekannt sind. Vorteil dieser Verbindungen ist ihre leichte Verfügbarkeit, ihr niedriger Preis und die breite Variationsmöglichkeit, die eine optimale Anpassung der Fällungsreagenzien an das jeweilige Polymerisationssystem ermöglichen. Regler werden in der freiradikalischen Polymerisation eingesetzt, um das Molekulargewicht der Polymerisate zu steuern.

In der freiradikalischen Polymerisation wird die Menge an Reglern, bezogen auf die zu polymerisierenden Monomeren, zumeist mit 0,05 Gew-% bis 5 Gew-%, angegeben. In der vorliegenden Erfindung wird die Menge der eingesetzten Schwefelverbindung nicht auf die Monomere, sondern auf die Konzentration der Übergangsmetallverbindung in der Polymerlösung bezogen. Die erfindungsgemäßen schwefelhaltigen Fällungsmittel werden in diesem Sinne in 1,5 molaren Äquivalenten, bevorzugt 1,2 molaren Äquivalenten, besonders bevorzugt unter 1,1 molaren Äquivalenten und ganz besonders bevorzugt unter 1,05 molaren Äquivalenten eingesetzt.

Es ist dem Fachmann leicht ersichtlich, dass die beschriebenen Mercaptane bei einer Zugabe zur Polymerlösung nach Abbruch der Polymerisation mit Ausnahme der beschriebenen Substitutionsreaktion keinen weiteren Einfluss auf die Polymere haben können. Dies gilt insbesondere für die Molekulargewichtsverteilungen, das Molekulargewicht, zusätzliche Funktionalitäten, Glastemperaturen, bzw. Schmelztemperaturen bei teilkristallinen Polymeren und Polymerarchitekturen wie Verzweigungen oder Blockstrukturen.

Weiterhin ist dem Fachmann leicht ersichtlich, dass ein entsprechendes Verfahren, welches apparativ ausschließlich auf einer Filtration der Polymerlösung beruht, leicht in einen großtechnischen Prozess ohne größere Umbauten an bestehenden Lösungspolymerisationsanlagen implementierbar ist.

Ein weiterer Vorteil der vorliegenden Erfindung liegt darin, dass durch die Reduzierung auf einen oder maximal zwei Filtrationsschritte eine im Vergleich zu vielen etablierten Systemen sehr schnelle Aufarbeitung der Polymerlösung erfolgen kann.

Zudem erfolgen die Substitution, die Fällung und anschließende Filtration bei einer Temperatur im Bereich zwischen 0°C und 120°C, Verfahrensparameter in einem gängigen Bereich.

Ein weiteres Gebiet der Erfindung ist die effiziente, simultane Entfernung der Liganden, die z.B. im Falle von Aminverbindungen als Ammoniumhalogenide vorliegen. Diese ionischen Ammoniumhalogenide fallen in organischen Lösungsmitteln ebenfalls aus und können in der Filtration der Übergangsmetallverbindungen simultan entfernt werden. Im Falle besonders unpolarer Liganden kann es vorkommen, dass die Ammoniumsalze erst verzögert ausfallen. In diesem Fall wäre nach einer gewissen Alterung des Filtrats ein zweiter Filtrationsschritt nötig.

Als Initiator werden in der ATRP Verbindungen eingesetzt, die eine oder mehrere Atome bzw. Atomgruppen X aufweisen, welche unter den Polymerisationsbedingungen des ATRP-Verfahrens radikalisch übertragbar sind. Bei der Substitution der aktiven Gruppe X am jeweiligen Kettenende des Polymers wird eine Säure der Form X-H freigesetzt. Es wurde gefunden, dass diese Säure in direkter Folge den Liganden L protoniert und damit den Metall-Ligand-Komplex quenscht. Das Übergangsmetall fällt dabei in der Regel in der Form aus, in der es am Anfang der Polymerisation eingesetzt wurde: z.B. im Falle von Kupfer als CuBr, CuCl oder Cu₂O. Unter der Bedingung, dass das Übergangsmetall simultan z.B. durch Einleiten von Luft oxidiert wird, fällt die Übergangsmetallverbindung zusätzlich in der höheren Oxidationsstufe aus. Um diesen Effekt zu erreichen muss der erfindungsgemäße Einsatz besagter Schwefelverbindung bezogen auf die aktive Gruppe X am Polymerkettenende nur in einem maximalen Überschuss von z.B. 1,1 Äquivalenten eingesetzt werden. Entsprechendes gilt bezogen auf den Liganden L: Bei Komplexen in denen das Übergangsmetall und der Ligand im Verhältnis 1:1 vorliegen, genügt ebenfalls ein nur sehr geringer Überschuss der Schwefelverbindung, um ein vollständiges Quenschen des Übergangmetallkomplexes zu erreichen. Beispiele für solche Liganden sind die weiter unten beschriebenen N,N,N',N",N"-Pentamethyldiethylentriamin (PMDETA) und Tris(2-aminoethyl)amin (TREN). Im Falle von Liganden, die in der Komplexverbindung in einem biäquivalenten Verhältnis zum Übergangsmetall vorliegen, ist diese Erfindung nur anwendbar, wenn das Übergangsmetall in einem deutlichen Unterschuss von z.B. 1:2 gegenüber den aktiven Gruppen X eingesetzt wird. Beispiel für einen solchen Liganden ist 2,2'-Bipyridin.

Alternativ zu einem zweiten Filtrationsschritt kann die erste Filtration modifiziert werden. Durch Zugabe von geeigneten Absorptionsmitteln wie zum Beispiel Aluminiumoxid, Silica, Hydrotalcit oder lonenaustauscherharzen kann eine Immobilisierung der Ammoniumsalze erfolgen. Auch können unlösliche organische Polysäuren wie Polyacrylsäure oder Polymethacrylsäure oder unlösliche Polymethacrylate bzw. Polyacrylate mit hohem Säureanteil bzw. deren Mischungen oder deren Mischungen mit den zuvor aufgeführten anorganischen Verbindungen zugesetzt werden. Gegenüber dem im Stand der Technik aufgeführten Einsatz von oftmals identischen Adsorptionsmitteln werden die entsprechenden Hilfsstoffe in dem erfindungsgemäßen Verfahren nur optional eingesetzt. Ferner sind im Vergleich zu den beschriebenen Verfahren des Standes der Technik nur deutlich geringere Mengen dieser Hilfsstoffe nötig. Auch beschränkt sich deren Abtrennung auf einen zusätzlichen Filtrationsschritt oder kann auch simultan im gleichen Filtrationsschritt mit der Entfernung der gefällten Übergangsmetallverbindungen erfolgen.

Alternativ ist auch eine vorhergehende oder auch nachträglich durchgeführte Extraktion der Lösung zum Beispiel mit Wasser oder Pufferlösungen möglich.

Wie dem Fachmann leicht ersichtlich ist, ist die Übertragung dieses Verfahrens zur Ligandenentfernung auch auf nicht Amin basierende Systeme übertragbar.

Zur Reduzierung letzter Spuren an Schwefelverbindungen und/oder Liganden können H Adsorptionsmittel oder Adsorptionsmittelmischungen eingesetzt werden. Dies kann parallel oder in aufeinanderfolgenden Aufarbeitungsschritten erfolgen. Die Adsorptionsmittel sind aus dem Stand der Technik bekannt, vorzugsweise ausgewählt aus der Gruppe Silica und/oder Aluminiumoxid, organische Polysäuren sowie Aktivkohle (z.B. Norit SX plus der Fa. Norit).

Auch die Entfernung der Aktivkohle kann in einem gesonderten oder in einem zur Übergangsmetallentfernung simultanen Filtrationsschritt erfolgen. In einer besonders effizienten Variante wird die Aktivkohle nicht als Feststoff zur Polymerlösung gegeben, sondern die Filtration erfolgt durch mit Aktivkohle beladene Filter, die kommerziell verfügbar sind (z.B. AKS 5 der Fa. Pall Seitz Schenk). Auch zur Anwendung kommen kann eine Kombination aus der Zugabe von den zuvor beschriebenen sauren Hilfsstoffen und Aktivkohle bzw. der Zuschlag der zuvor beschrieben Hilfsstoffe und die Filtration über mit Aktivkohle beladene Filter.

Die vorliegende Erfindung bezieht sich auf die Entfernung der endständigen Halogenatome und der Übergangsmetallkomplexe aus sämtlichen mittels ATRP-Verfahren hergestellten Polymerlösungen. Im Folgenden werden die Möglichkeiten, die sich aus der ATRP ergeben, kurz umrissen. Diese Aufzählungen sind jedoch nicht dazu geeignet die ATRP und damit die vorliegende Erfindung eingrenzend zu beschreiben. Sie dienen vielmehr dazu, die.große Bedeutung und die vielseitige Einsatzmöglichkeit der ATRP und damit auch der vorliegenden Erfindung zur Aufarbeitung entsprechender ATRP-Produkte aufzuzeigen:

Die mittels ATRP polymerisierbaren Monomere sind hinlänglich bekannt. Im Folgenden werden ein paar Beispiele aufgelistet, ohne die vorliegende Erfindung in irgendeiner Form einzuschränken. Dabei beschreibt die Schreibweise (Meth)acrylat die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Monomere, die polymerisiert werden, sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)-acrylat, Lauryl(meth)acrylat, Cyclohexyl(meth)acrylat, Isobornyl(meth)acrylat; Aryl-(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxy-propylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxy-methylmethacrylat, 1-Ethoxybutylmethacrylat, 1-Ethoxyethylmethacrylat, Ethoxy-methylmethacrylat, Poly(ethylenglycol)methylether(meth)acrylat und Poly-(propylenglycol)methylether(meth)acrylat. Die Monomerauswahl kann auch jeweilige hydroxyfunktionalisierte und/oder aminofunktionalisierte und/oder mercaptofunktionalisierte und/oder olefinisch funktionalisierte Acrylate bzw. Methacrylate wie zum Beispiel Allylmethacrylat oder Hydroxyethylmethacrylat umfassen.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar oder homopolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinyloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie die jeweiligen hydroxyfunktionalisierten und/oder aminofunktionalisierten und/oder mercaptofunktionalisierten und/oder olefinisch funtkionalisierten Verbindungen. Ferner können diese Copolymere auch derart hergestellt werden, dass sie eine Hydroxy-und/oder Amino- und/oder Mercaptofunktionalität und/oder eine olefinische Funktionalität in einem Substituenten aufweisen. Solche Monomere sind beispielsweise

Vinylpiperidin, 1-Vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, Acetate, vorzugsweise Butylacetat, Ethylacetat, Propylacetat; Ketone, vorzugsweise Ethylmethylketon, Aceton; Ether; Aliphate, vorzugsweise Pentan, Hexan; Alkohole, vorzugsweise Cyclohexanol, Butanol, Hexanol, aber auch Biodiesel.

Blockcopolymere der Zusammensetzung AB können mittels sequentieller Polymerisation dargestellt werden. Blockcopolymere der Zusammensetzung ABA oder ABCBA werden mittels sequentieller Polymerisation und Initiierung mit bifunktionellen Initiatoren dargestellt.

Neben der Lösungspolymerisation kann die ATPR auch als Emulsions-, Miniemulsions-, Mikroemulsions- oder Suspensionspolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weisen die erfindungsgemäß gewonnen Polymere ein zahlenmittleres Molekulargewicht zwischen 5000 g/mol und 120000 g/mol, besonders bevorzugt ≤ 50000 g/mol und ganz besonders bevorzugt zwischen 7500 g/mol und 25000 g/mol auf.

Es wurde gefunden, dass die Breite der Molekulargewichtsverteilung unter 1,8, bevorzugt unter 1,6, besonders bevorzugt unter 1,4 und idealerweise unter 1,2 liegt.

Als Initiator kann jede Verbindung eingesetzt werden, die eine oder mehrere Atome bzw. Atomgruppen X aufweisen, welche unter den Polymerisationsbedingungen des ATRP-Verfahrens radikalisch übertragbar sind. Bei der aktiven Gruppe X handelt es sich in der Regel um Cl, Br, I, SCN und/oder N₃. Geeignete Initiatoren umfassen verallgemeinert folgende Formeln:

R¹R²R³C-X_{,} R¹C(=O)-X, R¹R²R³Si-X_{,} R¹NX₂, R¹R²N-X, (R¹)ₙP(O)ₘ-X₃₋ₙ, (R¹O)ₙP(O)ₘ-X₃₋ₙ und (R¹)(R²O)P(O)ₘ-X,

wobei X ausgewählt ist aus der Gruppe bestehend aus Cl, Br, I, OR⁴, SR⁴, SeR⁴, OC(=O)R⁴, OP(=O)R⁴, OP(=O)(OR⁴)₂, OP(=O)OR⁴, C)-N(R⁴)₂, CN; NC, SCN, NCS, OCN, CNO und N₃ darstellen (wobei R⁴ eine Alkylgruppe von 1 bis 20 Kohlenstoffatomen, wobei jedes Wasserstoffatom unabhängig durch ein Halogenatom, vorzugsweise Fluorid oder Chlorid ersetzt sein kann oder Alkenyl von 2 bis 20 Kohlenstoffatomen, vorzugsweise Vinyl, Alkenyl von 2 bis 10 Kolenstoffatomen, vorzugsweise Acetylenyl, Phenyl, welches mit 1 bis 5 Halogenatomen oder Alkylgruppen mit 1 bis 4 Kohlenstoffatomen substituiert sein kann, oder Aralkyl bedeutet und wobei R¹, R² und R³ unabhängig voneinander ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, Silylgruppen, Alkylsilylgruppen, Alkoxysilylgruppen, Amingruppen, Amidgruppen, COCI, OH, CN, Alkenyl- oder Alkinylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkenyl- oder Alkenylgruppen mit 2 bis 6 Kohlenstoffatomen, welche mit Oxiranyl oder Glycidyl, Aryl, Heterocyclyl, Aralkyl, Aralkenyl (arylsubstituiertes Alkenyl), wobei Aryl wie zuvor definiert ist und Alkenyl Vinyl ist, welches mit ein oder zwei C₁ bis C₆ Alkylgruppen, in welchen ein bis alle der Wasserstoffatome, vorzugsweise eines durch Halogen substituiert sind (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkenylgruppen mit 1 bis 6 Kohlenstoffatomen, die mit 1 bis 3 Substituenten (vorzugsweise 1) ausgewählt aus der Gruppe bestehend aus C₁ bis C₄ Alkoxy, Aryl, Heterocyclyl, Ketyl, Acetyl, Amin, Amid, Oxiranyl und Glycidyl substituiert sind und m=0 oder 1; m=0, 1 oder 2 darstellt. Vorzugsweise sind nicht mehr als zwei der Reste R¹, R² und R³ Wasserstoff, besonders bevorzugt ist maximal einer der Reste R¹, R² und R³ Wasserstoff.

Zu den besonders bevorzugten Initiatoren gehören Benzylhalogenide, wie p-Chlormethylstyrol, Hexakis(α-brommethyl)benzol, Benzylchlorid, Benzylbromid, 1-Bromi-phenylethan und 1-Chlor-i-phenylethan. Weiterhin besonders bevorzugt sind Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat oder Ethyl-2-bromisobutyrat. Bevorzugt sind auch Tosylhalogenide, wie p-Toluolsulfonylchlorid; Alkylhalogenide, wie Tetrachlormethan, Tribromethan, 1-Vinylethylchlörid oder 1-Vinylethylbromid; und Halogenderivate von Phosphorsäureestern, wie Demethylphosphonsäurechlorid.

Eine besondere, zur Synthese von Blockcopolymeren geeignete Gruppe der Initiatoren stellen die Makroinitiatoren dar. Diese zeichnen sich dadurch aus, dass es sich bei 1 bis 3, bevorzugt 1 bis 2 und ganz besonders bevorzugt bei einem Rest aus der Gruppe R¹, R² und R³ um makromolekulare Reste handelt. Diese Makroreste können ausgewählt sein aus der Gruppe der Polyolefine, wie Polyethylene oder Polypropylene; Polysiloxane; Polyether, wie Polyethylenoxid oder Polypropylenoxid; Polyester, wie Polymilchsäure oder anderer bekannter, endgruppenfunktionalisierbarer Makromoleküle. Dabei können die makromolekularen Reste jeweils ein Molekulargewicht zwischen 500 und 100000, bevorzugt zwischen 1000 und 50000 und besonders bevorzugt zwischen 1500 und 20000 aufweisen. Auch möglich ist es, besagte Makromoleküle zur Initiierung der ATRP einzusetzen, die an beiden Enden als Initiator geeignete Gruppen aufweisen, zum Bespiel in Form eines Bromtelechelen. Mit Makroinitiatoren dieser Art ist es möglich ABA-Triblockcopolymere aufzubauen.

Eine weitere wichtige Gruppe der Initiatoren stellen die bi- oder multifunktionellen Initiatoren dar. Mit multifunktionellen Initiatormolekülen ist es zum Beispiel möglich, Sternpolymere zu synthetisieren. Mit bifunktionellen sind Tri- bzw. Pentablockcopolymere und telechele Polymere darstellbar. Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX2-(CH2)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m-bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder lod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) eingesetzt werden. Vorzugsweise werden 1,4-Butandiol-di-(2-bromo-2-methylpropionat), 1,2-Ethylenglycol-di-(2-bromo-2-methylpropionat), 2,5-Dibromadipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für ATPR sind in Chem.Rev. 2001, 101, 2921 aufgeführt. Es werden überwiegend Kupferkomplexe beschrieben - unter anderem kommen aber auch Eisen-, Kobalt-, Chrom-, Mangan-, Molybdän-, Silber-, Zink-, Palladium-, Rhodium-, Platin-, Ruthenium-, Iridium-, Ytterbium-, Samarium-, Rhenium- und/oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu monofunktionellem Initiator liegt im Allgemeinen im Bereich von 0,01:1 bis 10:1, vorzugsweise im Bereich von 0,1:1 bis 3:1 und besonders bevorzugt im Bereich von 0,5:1 bis 2:1, ohne dass hierdurch eine Beschränkung erfolgen soll.

Das molare Verhältnis Übergangsmetall zu bifunktionellem Initiator liegt im Allgemeinen im Bereich von 0,02:1 bis 20:1, vorzugsweise im Bereich von 0,2:1 bis 6:1 und besonders bevorzugt im Bereich von 1:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Entscheidend für die vorliegende Erfindung ist, dass die Liganden protonierbar sind.

Bevorzugt sind Liganden, die in der Koordinationsverbindung in einem Verhältnis von 1:1 zum Übergangsmetall vorliegen. Bei Verwendung von Liganden wie 2,2'-Bipyridin, die in einem Verhältnis zum Übergangsmetall von 2:1 im Komplex gebunden sind, kann eine vollständige Protonierung nur erfolgen, wenn das Übergangsmetall in einem deutlichen Unterschuss von z.B. 1:2 zum aktiven Kettenende X eingesetzt wird. Eine solche Polymerisation wäre jedoch gegenüber einer mit äquivalenten Komplex zu X Verhältnissen stark verlangsamt.

Für die erfindungsgemäß aufgearbeiteten Produkte ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Beispielsweise werden mittels ATRP synthetisierte Polymere als Präpolymere in Hotmelts, Klebmassen, Dichtmassen, Heißsiegelmassen, für polymeranaloge Reaktionen oder zum Aufbau von Blockcopolymeren verwendet. Die Polymere können auch Verwendung finden in Formulierungen zur kosmetischen Anwendung, in Beschichtungsmaterialien, als Dispergiermittel, als Polymeradditiv oder in Verpackungen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre 15 g n-Butylacrylat, 15,5 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,49 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,6 g n-Dodecylmercaptan zugegeben. Die zuvor grünliche Lösung färbt sich spontan rot und ein roter Niederschlag fällt aus. Die Filtration erfolgt mittels einer Überdruckfiltration. Der Filterkuchen färbt sich innerhalb weniger Stunden schwarz. Das mittlere Molekulargewicht und die Molekulargewichtsverteilung des Polymers im Filtrat werden abschließend durch GPC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Auch von dieser Fraktion wird mittels AAS der Kupfergehalt einer getrockneten Probe bestimmt und eine GPC-Messung vorgenommen.

Nach 12 h bildet sich am Boden des Gefäßes mit der filtrierten Polymerlösung ein farbloser, wachsartiger Niederschlag. Dieser Niederschlag wird zusätzlich mittels ¹H-NMR-, IR-Spektroskopie, lonenchromatographie, Elementaranalyse, AAS und GPC charakterisiert.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre 15 g n-Butylacrylat, 15,5 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,48 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die anschließende Filtration erfolgt unter Druck über einen Aktivkohlefilter (AKS 5 der Fa. Pall Seitz Schenk). Das mittlere Molekulargewicht und die Molekulargewichtsverteilung des Polymers im Filtrat werden abschließend durch GPC-Messungen bestimmt. Von einer getrockneten Probe des Filtrats wird anschließend mittels AAS der Kupfergehalt bestimmt.

### Beispiel 2

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden 0,6 g n-Dodecylmercaptan zugegeben. Die zuvor grünliche Lösung färbt sich spontan rot und ein roter Niederschlag fällt aus. Die Filtration erfolgt mittels einer Überdruckfiltration. Der Filterkuchen färbt sich innerhalb weniger Stunden Schwarz. Das mittlere Molekulargewicht und die Molekulargewichtsverteilung des Polymers im Filtrat werden abschließend durch GPC-Messungen bestimmt. Von einer getrockneten Probe des Filtrats wird anschließend mittels AAS der Kupfergehalt bestimmt.

Die verbleibende Lösung wird mit 8 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Auch von dieser Fraktion wird mittels AAS der Kupfergehalt einer getrockneten Probe bestimmt und eine GPC-Messung vorgenommen.

Nach 12 h bildet sich am Boden des Gefäßes mit der filtrierten Polymerlösung ein Farbloser, wachsartiger Niederschlag. Dieser Niederschlag wird zusätzlich mittels ¹H-NMR-, IR-Spektroskopie, lonenchromatographie, Elementaranalyse, AAS und GPC charakterisiert.

### Vergleichsbeispiel 2

In einem mit Rührer, Thermometer, Rückflusskühler, Stickstoffeinleitungsrohr und Tropftrichter ausgestatteten Doppelmantelgefäß wurden unter N₂-Atmosphäre 10 g Methylmethacrylat, 15,8 g Butylacetat, 0,2 g Kupfer(I)oxid und 0,5 g PMDETA vorgelegt. Die Lösung wird für 15 min. bei 60 °C gerührt. Anschließend wird bei gleicher Temperatur 0,47 g 1,4-Butandiol-di-(2-bromo-2-methylpropionat) zugegeben. Es wird für eine Polymerisationszeit von 4 Stunden bei 70 °C gerührt. Nach ca. 5 min Einleiten von Luftsauerstoff zum Abbruch der Reaktion werden der Lösung 8 g Tonsil Optimum 210 FF (Fa. Südchemie) und 4 Gew% Wasser zugesetzt und 60 min gerührt. Die Filtration erfolgt mittels einer Überdruckfiltration über einen Aktivkohlefilter (AKS 5 der Fa. Pall Seitz Schenk). Das mittlere Molekulargewicht und die Molekulargewichtsverteilung des Polymers im Filtrat werden abschließend durch GPC-Messungen bestimmt. Von einer getrockneten Probe des Filtrats wird anschließend mittels AAS der Kupfergehalt bestimmt.

**Tabelle 1**

| Beispiel | Beispiel 1 | Vergleich 1 | Beispiel 2 | Vergleich 2 |
|---|---|---|---|---|
| Monomer | n-BA | n-BA | MMA | MMA |
| Cu-Konzentration (Polymerisation) | ca. 5,5 mg/g | | | |
| Schwefelverbindung | n-DDM | - | N-DDT | - |
| Adsorptionsmittel | - | Alox/Silica | - | Alox/Silica |
| Cu-Konzentration (1. Filtration) | 0,5 µg/g | 44 µg/g | 0,2 µg/g | 22 µg/g |
| Adsorptionsmittel | Alox/Silica/ Aktivkohlefilt. | Alox/Silica/ Aktivkohlefilt. | Alox/silica/ Aktivkohlefilt. | Alox/Silica/ Aktivkohlefilt. |
| Cu-Konzentration (2. Filtration) | 0,2 µg/g | 10 µg/g | 0,09 µg/g | 4 µg/g |
| Äquivalente zu Cu | 1,4 | - | 1,8 | - |
| Mₙ (vor Reinigung) | 8900 | 9800 | 10100 | 9300 |
| M_{w}/Mₙ (vor Reinigung) | 1,20 | 1,18 | 1,20 | 1,17 |
| Mₙ (nach Reinigung) | 8900 | 9800 | 10200 | 9400 |
| M_{w}/Mₙ (nach Reinigung) | 1,19 | 1,18 | 1,21 | 1,16 |

| | | | | |
|---|---|---|---|---|
| MMA= Methylmethacrylat; n-BA= n-Butylacrylat; n-DDM= n-Dodecylmercaptan; Alox= Aluminiumoxid; | | | | |

Aus den Beispielen ist klar ersichtlich, dass die bereits sehr guten Ergebnisse mit Adsorptionsmitteln zur Entfernung von Übergangsmetallkomplexen (in diesem Fall Kupferkomplexen) aus Polymerlösungen, durch die vorhergehende Fällung mit Schwefelverbindungen klar verbessert werden kann.

Die vorliegenden Beispiele wurden auf den ATRP-Prozess bezogen. Dabei wurden die Polymerisationsparameter dergestalt ausgewählt, dass mit besonders hohen Kupferkonzentrationen gearbeitet werden musste: niedriges Molekulargewicht, 50%ige Lösung und bifunktioneller Initiator.

Aus den Ergebnissen zu Beispiel 1 erkennt man, dass entsprechende Schwefelverbindungen bezogen auf die Übergangsmetallverbindung bereits in kleinstem Überschuss eingesetzt zu einer sehr effizienten Fällung führen. Man erkennt aus den Beispielen auch, dass mit sämtlichen Thiol funktionalisierten Reagenzien eine effizientere Entfernung der Übergangsmetallverbindungen aus der Lösung realisierbar ist, als dies durch eine bereits optimierte Aufarbeitung mit Adsorptionsmitteln möglich ist.

Aus den Angaben zu den Restschwefelgehalten ist in der Tabelle bereits eine zufrieden stellende Entfernung ersichtlich. Durch Variation im Rahmen des erfindungsgemäßen Verfahrens ist eine Steigerung der Abtrennungseffizienz darüber hinaus realisierbar.

Aus dem Vergleich der Molekulargewichte und Molekulargewichtsverteilungen vor und nach der Aufarbeitung erkennt man aus allen Beispielen und Vergleichsbeispielen, dass die angewendeten Methoden mit Ausnahme der Substitution der Endgruppen keinen Einfluss auf die Polymercharakteristika haben.

Der Nachweis der Endgruppensubstitution erfolgt gleich mehrfach durch Charakterisierung verschiedener Bestandteile der aufgearbeiteten Polymerlösung:
1.) der Kupferniederschlag: der rote Niederschlag, der sich bei Zugabe der Schwefelreagenzien bildet, zeigt mit < 10 ppm einen äußerst geringen Schwefelanteil, so dass eine Fällung des Metalls als Sulfid ausgeschlossen werden kann.
2.) Das Polymer: Die Elementaranalyse zeigt auch nach Entfernen des zweiten, farblosen Niederschlags einen sehr hohen Schwefelgehalt der Polymerlösung. Nahezu der gesamte dem System zugesetzte Schwefel findet sich in der Lösung, bzw. im getrockneten Produkt wieder.
3.) Der zweite, farblose Niederschlag: Sowohl ¹H-NMR-Untersuchungen als auch IR-Spektroskopie zeigten, dass es sich bei dem Niederschlag um das Ammoniumsalz des einfach protonierten Triamins PMDETA handelt. Eine Elementaranalyse zeigte, dass dieser Niederschlag schwefelfrei ist. Mittels lonenchromatographie konnte je nach Probe ein Bromidgehalt zwischen 32 Gew% und 37 Gew% nachgewiesen werden. Dieser Wert entspricht dem Gehalt in einem reinen PMDETA-Ammoniumbromid.

## Patentansprüche

1. Verwendung einer Schwefelverbindung zur Entfernung von Halogenatomen aus Polymeren und Abtrennung von Übergangsmetallverbindungen aus Polymerlösungen, **dadurch gekennzeichnet, dass** die Halogenatome mittels Zusatz einer geeigneten Schwefelverbindung bei einer Temperatur zwischen 0°C und 120°C substituiert und simultan die Übergangsmetallverbindungen durch Zugabe dieser Schwefelverbindung gefällt und anschließend bei einer Temperatur zwischen 0°C und 120°C mittels Filtration abgetrennt werden, und dass es sich bei der Schwefelverbindung um ein Mercaptan oder eine andere organische Verbindung mit einer Thiolgruppe handelt.

2. Verwendung einer Schwefelverbindung gemäß Anspruch 1, **dadurch gekennzeichnet, dass** es sich bei der Schwefelverbindung um n-Dodecylmercaptan, Methylmercaptan, Ethylmercaptan, Butylmercaptan, Ethylhexylmercaptan, Isooctylmercaptan, tert-Dodecylmercaptan, Thioglykolessigsäure, Mercaptopropionsäure, Mercaptoethanol, Mercaptopropanol, Mercaptobutanol, Mercaptohexanol, oder Octylthioglykolat handelt.

3. Verwendung einer Schwefelverbindung gemäß Anspruch 1, **dadurch gekennzeichnet, dass** die Schwefelverbindung nach oder während des Abbruchs einer Polymerisation zugegeben wird.

4. Verwendung einer Schwefelverbindung gemäß Anspruch 1, **dadurch gekennzeichnet, dass** bezogen auf die Konzentration der zuvor polymerisationsaktiven Kettenenden unter 1,1 molare Äquivalente der Schwefelverbindung eingesetzt werden.

5. Verwendung einer Schwefelverbindung gemäß Anspruch 1, **dadurch gekennzeichnet, dass** es sich bei der als Katalysator in der Polymerisation eingesetzten Übergangsmetallverbindung um eine Kupferverbindung handelt.

6. Verwendung einer Schwefelverbindung gemäß Anspruch 1, **dadurch gekennzeichnet, dass** man in der vorangehenden Polymerisation einen Initiator einsetzt, der eine aktive Gruppe X aufweist, bei der es sich um Cl, Br, oder I handelt.

7. Verwendung einer Schwefelverbindung gemäß Anspruch 6, **dadurch gekennzeichnet, dass** der Initiator bezüglich der aktiven Gruppen ein-, zweioder mehrwertig sein kann.

8. Verwendung einer Schwefelverbindung gemäß Anspruch 5, **dadurch gekennzeichnet, dass** als Ligand des Katalysators N-haltige Chelatliganden verwendet werden.

9. Verwendung einer Schwefelverbindung gemäß Anspruch 6, **dadurch gekennzeichnet, dass** die aktive Gruppe X am Kettenende des Polymers durch die Schwefelverbindung zu einem Thioether unter Freisetzung einer Säure der Form X-H substituiert wird. dass der Ligand von der Säure X-H protoniert wird, dass der Ligand durch die Protonierung von dem koordinierten Übergangsmetall gelöst wird, und dass das Übergangsmetall durch die Entfernung des Liganden ausfällt.

10. Verwendung einer Schwefelverbindung gemäß Anspruch 1, **dadurch gekennzeichnet, dass** das Polymer durch Polymerisation nach dem ATRP-Verfahren von Alkylacrylaten, Alkylmethacrylaten, Styrolen, Vinylestern, Vinylethern, Fumaraten, Maleaten, Itaconaten, Acrylonitrilen und/oder anderen mittels ATRP polymerisierbaren Monomeren und/oder Mischungen aus Alkylacrylaten, Alkylmethacrylaten, Vinylestern, Vinylethern, Fumaraten, Maleaten, Itaconaten, Styrolen, Acrylonitrilen, und/oder anderen mittels ATRP polymerisierbaren Monomeren erhältlich ist.

11. Verwendung einer Schwefelverbindung gemäß Anspruch 1, **dadurch gekennzeichnet, dass** der Metallgehalt in der Polymerlösung durch die Fällung und die anschließende Filtration um mindestens 95 % abnimmt.

## Claims

1. Use of a sulfur compound for the removal of halogen atoms from polymers and removal of transition metal compounds from polymer solutions, **characterized in that** the halogen atoms are substituted by addition of a suitable sulfur compound at a temperature of from 0°C to 120°C and simultaneously the transition metal compounds are precipitated by addition of said sulfur compound, and are then removed at a temperature of from 0°C to 120°C by filtration, and **in that** the sulfur compound involves a mercaptan or another organic compound having a thiol group.

2. Use of a sulfur compound according to Claim 1, **characterized in that** the sulfur compound involves n-dodecyl mercaptan, methyl mercaptan, ethyl mercaptan, butyl mercaptan, ethylhexyl mercaptan, isooctyl mercaptan, tert-dodecyl mercaptan, thioglycolacetic acid, mercaptopropionic acid, mercaptoethanol, mercaptopropanol, mercaptobutanol, mercaptohexanol, or octyl thioglycolate.

3. Use of a sulfur compound according to Claim 1, **characterized in that** the sulfur compound is added after or during the termination of a polymerization.

4. Use of a sulfur compound according to Claim 1, **characterized in that**, based on the concentration of the chain ends previously active in polymerization, less than 1.1 molar equivalents of the sulfur compound are used.

5. Use of a sulfur compound according to Claim 1, **characterized in that** the transition metal compound used as catalyst in the polymerization involves a copper compound.

6. Use of a sulfur compound according to Claim 1, **characterized in that** the preceding polymerization uses an initiator which has an active group X which involves Cl, Br, or I.

7. Use of a sulfur compound according to Claim 6, **characterized in that**, in relation to the active groups, the initiator can be mono-, di-, or polyfunctional.

8. Use of a sulfur compound according to Claim 5, **characterized in that** the ligands of the catalyst used comprise N-containing chelating ligands.

9. Use of a sulfur compound according to Claim 6, **characterized in that** the active group X at the end of the polymer chain is substituted by the sulfur compound to give a thioether, with liberation of an acid of type X-H, **in that** the ligand is protonated by the acid X-H, **in that** the protonation releases the ligand from the coordinated transition metal, and **in that** the removal of the ligand precipitates the transition metal.

10. Use of a sulfur compound according to Claim 1, **characterized in that** the polymer is obtainable through polymerization by the ATRP process of alkyl acrylates, of alkyl methacrylates, of styrenes, of vinyl esters, of vinyl ethers, of fumarates, of maleates, of itaconates, of acrylonitriles and/or of other monomers polymerizable by ATRP, and/or mixtures composed of alkyl acrylates, of alkyl methacrylates, of vinyl esters, of vinyl ethers, of fumarates, of maleates, of itaconates, of styrenes, of acrylonitriles, and/or of other monomers polymerizable by ATRP.

11. Use of a sulfur compound according to Claim 1, **characterized in that** the precipitation and the subsequent filtration reduce the metal content in the polymer solution by at least 95%.

## Revendications

1. Utilisation d'un composé soufré pour l'élimination d'atomes d'halogène à partir de polymères et séparation de composés contenant des métaux de transition à partir de solutions de polymères, **caractérisée en ce qu'**on remplace les atomes d'halogène par addition d'un composé soufré approprié, à une température comprise entre 0 °C et 120 °C, et en même temps les composés contenant des métaux de transition sont précipités par addition de ce composé soufré et ensuite séparés par filtration à une température comprise entre 0 °C et 120 °C, et **en ce que** le composé soufré consiste en un mercaptan ou un autre composé organique comportant un groupe thiol.

2. Utilisation d'un composé soufré selon la revendication 1, **caractérisée en ce que** le composé soufré consiste en n-dodécylmercaptan, méthylmercaptan, éthylmercaptan, butylmercaptan, éthylhexylmercaptan, iso-octylmercaptan, tert-dodécylmercaptan, acide thioglycolacétique, acide mercaptopropionique, mercaptoéthanol, mercaptopropanol, mercaptobutanol, mercaptohexanol ou thioglycolate d'octyle.

3. Utilisation d'un composé soufré selon la revendication 1, **caractérisée en ce qu'**on ajoute le composé soufré avant ou pendant l'arrêt d'une polymérisation.

4. Utilisation d'un composé soufré selon la revendication 1, **caractérisée en ce qu'**on utilise moins de 1,1 équivalent molaire du composé soufré, par rapport à la concentration des extrémités de chaîne précédemment actives dans la polymérisation.

5. Utilisation d'un composé soufré selon la revendication 1, **caractérisée en ce que** le composé contenant un métal de transition, utilisé comme catalyseur dans la polymérisation, consiste en un composé contenant du cuivre.

6. Utilisation d'un composé soufré selon la revendication 1, **caractérisée en ce que** dans la polymérisation précédente on utilise un amorceur comportant un groupe actif X, qui consiste en Cl, Br ou I.

7. Utilisation d'un composé soufré selon la revendication 6, **caractérisée en ce que** l'amorceur peut être mono-, di- ou plurivalent eu égard aux groupes actifs.

8. Utilisation d'un composé soufré selon la revendication 5, **caractérisée en ce que** comme ligand du catalyseur on utilisé des ligands chélateurs azotés.

9. Utilisation d'un composé soufré selon la revendication 6, **caractérisée en ce qu'**on remplace le groupe actif X à l'extrémité de chaîne du polymère par le composé soufré pour obtenir un thioéther avec libération d'un acide de forme X-H, **en ce que** le ligand est protoné par l'acide X-H, **en ce que** par la protonation le ligand est détaché du métal de transition coordonné, et **en ce que** le métal de transition précipite en raison de la séparation du ligand.

10. Utilisation d'un composé soufré selon la revendication 1, **caractérisée en ce que** le polymère peut être obtenu par polymérisation selon la procédé ATRP d'acrylates d'alkyle, de méthacrylates d'alkyle, de styrènes, d'esters vinyliques, d'éthers vinyliques, de fumarates, de maléates, d'itaconates, d'acrylonitriles et/ou d'autres monomères polymérisables par ATRP et/ou de mélanges d'acrylates d'alkyle, de méthacrylates d'alkyle, d'esters vinyliques, d'éthers vinyliques, de fumarates, de maléates, d'itaconates, de styrènes, d'acrylonitriles et/ou d'autres monomères polymérisables par ATRP.

11. Utilisation d'un composé soufré selon la revendication 1, **caractérisée en ce que** la teneur en métal de la solution de polymère est réduite d'au moins 95 % par la précipitation et la filtration subséquente.
